# EUROPÄISCHE PATENTSCHRIFT

(11) **EP 3 698 027 B1**
(45) Veröffentlichungstag und Bekanntmachung des Hinweises auf die Patenterteilung: **29.09.2021**
(21) Anmeldenummer: 18785917.8
(22) Anmeldetag: 09.10.2018
(51) Int. Cl.: F01N 3/20, F01N 9/00, F01N 11/00

(54) **VERFAHREN ZUR ERMITTLUNG EINER NOX-KONZENTRATION UND EINES NH3-SCHLUPFES STROMABWÄRTS EINES SCR-KATALYSATORS**
METHOD FOR DETERMINING A NOX CONCENTRATION AND A NH3 SLIP DOWNSTREAM OF AN SCR CATALYST
PROCÉDÉ POUR DÉTERMINER UNE CONCENTRATION DE NOX ET UNE FUITE DE NH3 EN AVAL D'UN CATALYSEUR RCS

(30) Priorität: 16.10.2017 DE 102017218480
(43) Veröffentlichungstag der Anmeldung: 26.08.2020
(73) Patentinhaber: Robert Bosch GmbH, 70442 Stuttgart (DE)
(72) Erfinder: DANIEL, Christian, 71229 Leonberg (DE); MARKERT, Heiner, 70178 Stuttgart (DE); IMHOF, Volker, 70806 Kornwestheim (DE); SCHIEGG, Martin, 70825 Korntal-Muenchingen (DE); KLENSKE, Edgar, 70771 Leinfelden-Echterdingen (DE); ANGERMAIER, Stefan, 70327 Stuttgart (DE)
(86) Internationale Anmeldenummer: PCT/EP2018/077476
(87) Internationale Veröffentlichungsnummer: WO 2019/076686

(56) Entgegenhaltungen:
- EP-A1- 2 963 271
- DE-A1- 10 010 745
- DE-A1-102004 046 640
- DE-A1-102005 012 568
- DE-A1-102007 045 263
- DE-A1-102017 102 964
- JP-A- 2012 026 417

## Beschreibung

Die vorliegende Erfindung betrifft ein Verfahren zur Ermittlung einer NOₓ-Konzentration und eines NH₃-Schlupfes stromabwärts eines SCR-Katalysators eines Verbrennungsmotors eines Fahrzeugs.

### Stand der Technik

Die verbesserte Kontrolle und weitere Reduktion schädlicher Emissionen ist eine der bedeutendsten Herausforderungen für zukünftige Verbrennungsmotoren. Bereits bekannt ist der Einsatz von SCR-Katalysatoren (Selective Catalytic Reduction), welche im Abgas der Brennkraftmaschine enthaltene Stickoxide (NOₓ) in Gegenwart eines Reduktionsmittels zu Stickstoff reduzieren. Hierdurch können die Stickoxide im Abgas erheblich vermindert werden. Für den Ablauf der Reaktion wird Ammoniak (NH₃) benötigt, das dem Abgas zugemischt wird. Als Reduktionsmittel werden NH₃ oder NH₃-abspaltende Reagenzien eingesetzt. Beispielsweise kann hierfür eine wässrige Harnstofflösung verwendet werden, die vor dem SCR-Katalysator in den Abgasstrang mit Hilfe einer Dosiereinrichtung eingespritzt wird. Aus dieser Lösung bildet sich NH₃, das als Reduktionsmittel wirkt. Die Dosierung des Reduktionsmittels erfolgt vorzugsweise in Abhängigkeit von den motorischen Stickoxidemissionen und ist damit vorzugsweise von der momentanen Drehzahl und dem Drehmoment des Motors abhängig. Die Dosierung wird dann entsprechend in Abhängigkeit von Betriebskenngrößen der Brennkraftmaschine sowie in Abhängigkeit von Abgaskenngrößen vorgenommen. Dabei weist ein SCR-Katalysator eine bestimmte NH₃-Speicherfähigkeit auf, bei deren Überschreiten NH₃ hinter dem SCR-Katalysator austreten kann, was auch als NH₃-Schlupf bezeichnet wird. Der aktuelle Speichergrad an NH₃ im SCR-Katalysator wird auch als Füllungsgrad bezeichnet.

Aus der DE 102015207670 A1 ist Verfahren zur Überwachung der Speicherkapazität eines SCR-Katalysators für NH₃ bekannt. Dabei wird eine zu Diagnosezwecken vorgesehene Phase mit überstöchiometrischer Dosierung vorzeitig beendet, sobald anhand von erhöhten Signalen eines stromabwärts des SCR-Katalysators angeordneten NOₓ-Sensors auf einen NH₃-Schlupf geschlossen werden kann.

Die DE 102010002620 A1 offenbart ein Verfahren zum Betreiben eines SCR-Katalysators zur Nachbehandlung von Abgasen einer Brennkraftmaschine, bei dem zur Minderung von Stickoxiden (NOₓ) im Abgas ein Reduktionsmittel zudosiert wird und die erforderliche Menge des zuzudosierenden Reduktionsmittels anhand eines Modells errechnet wird. Bei einer Abweichung oberhalb einer vorgebbaren Schwelle zwischen einem gemessenen NOₓ-Sensorwert stromabwärts des SCR-Katalysators und einem modellierten NOₓ-Wert stromabwärts des SCR-Katalysators wird eine diskontinuierliche Adaption durch Senkung des Füllstandes im SCR-Katalysator und Einstellung des Systems in Abhängigkeit von einer erkannten Unterdosierung oder Überdosierung des Reduktionsmittels durchgeführt.

DE 10 2007 045 263 A betrifft ein Verfahren zur Steuerung der Reduktionsmittelzufuhr in ein Abgasnachbehandlungssystem eines Verbrennungsmotors, mindestens enthaltend einen SCR-Katalysator zum Entfernen von Stickoxiden aus dem Abgas, und eine Dosiereinrichtung für Reduktionsmittel.

DE 10 2017102 964 A betrifft eine Steuerung mit einer selbstabstimmenden Schaltung zur Steuerung eines Drucksystems zur Ausgabe eines Eingangsdrucks zu einem Eingangsdruckwert unter Verwendung eines adaptiven Fuzzy-Control-Systems und Aktualisierung der Dosier-Sollwerte einer Dosier-Sollwerttabelle zur Steuerung einer Dosierungseinheit eines Nachbehandlungssystems. Die selbstabstimmende Schaltung ist konfiguriert, einen Eingangsdruckwert zu bestimmen und ein Drucksteuersignal unter Verwendung des adaptiven Fuzzy-Steuerungssystems auf Basis des Eingangsdruckwerts, eines erfassten Eingangsdrucks und eines Fehlerbetrags zu erzeugen.

### Offenbarung der Erfindung

Es werden Verfahren zur Ermittlung einer NOₓ-Konzentration und eines NH₃-Schlupfes stromabwärts eines SCR-Katalysators eines Verbrennungsmotors eines Fahrzeugs vorgeschlagen. Dabei werden Größen, welche Zustandsgrößen eines Verbrennungsmotors, insbesondere Zustandsgrößen des Abgases des Verbrennungsmotors, repräsentieren, als erste Eingangsgrößen mindestens eines Maschinenlernalgorithmus oder mindestens eines stochastischen Modells herangezogen. Zudem wird eine Größe, welche einen aktuellen NH₃-Füllungsgrad des SCR-Katalysators repräsentiert, als weitere Eingangsgröße herangezogen. Durch den mindestens einen Maschinenlernalgorithmus oder das mindestens eine stochastische Modell werden abhängig von den ersten Eingangsgrößen und der weiteren Eingangsgröße die NOₓ-Konzentration stromabwärts des SCR-Katalysators, insbesondere am Ausgang des SCR-Katalysators, sowie der NH₃-Schlupf, stromabwärts des SCR-Katalysators, insbesondere am Ausgang des SCR-Katalysators, berechnet und ausgegeben.

Die Ausgangsgrößen der Modellierung des SCR-Katalysators sind somit der NH₃-Schlupf (Englisch: NH₃ slip) hinter dem SCR-Katalysator und die NOₓ-Konzentration hinter dem SCR-Katalysator, welche für gängige Systeme mit einer Anordnung des SCR-Katalysators am Ende des Abgasstrangs der austretenden NOₓ-Konzentration (Englisch: tailpipe NOₓ emission) des Fahrzeugs entspricht. Die NOₓ-Konzentration kann für NO und NO₂ separat berechnet und ausgegeben werden.

Das Verfahren stellt ein verbessertes Messsystem für die Ausgangsgrößen NOx-Konzentration hinter dem SCR-Katalysator und NH₃-Schlupf des SCR-Katalysators für einen Verbrennungsmotor dar. NOₓ-Sensoren hinter dem SCR-Katalysator sind schon aus Kostengründen derzeit noch nicht in allen Fahrzeugen verfügbar. Zudem liefern sie in bezüglich Emissionen besonders kritischen Betriebszuständen, z.B. bei einem Kaltstart, oftmals keine oder nur unzuverlässige Ergebnisse. Für den aktuellen Füllungsgrad an NH₃ eines SCR-Katalysators gibt es in aktuellen Systemen keine Sensorik. Für den tatsächlichen NH₃-Schlupf sind aktuelle, quantitative Aussagen mit aktueller Sensorik schwierig, zumal in besonderen Betriebszuständen wie Kaltstarts.

Die beschriebene dynamische, datenbasierte Modellierung hat dabei den Vorteil, dass höhere Genauigkeiten erreicht werden als bei gängigen physikalischen oder chemischen Modelle und sie durch ihre Universalität weniger aufwändig zu entwickeln sind sowie leichter an neue Anforderungen anpassbar.

Die besonders bevorzugte Variante mit Convolutional Neural Networks (CNN) ermöglicht ein besonders schnelles und effizientes Training auch bei großen Trainingsdaten, da CNN gut auch mit einer hohen Eingangsdimensionalität umgehen können. Zudem benötigen diese Modelle vergleichsweise wenig Speicherplatz, insbesondere bei vielen Trainingsdaten.

Die alternative, besonders bevorzugte Variante mit Gaußprozess-Modellen erlaubt probabilistische Aussagen über die Zuverlässigkeit des Modells, z.B. Konfidenzintervalle. Sie können auch bei wenigen Trainingsdaten verhältnismäßig genaue Ergebnisse liefern. Die Modelle benötigen vergleichsweise wenig Speicherplatz, insbesondere bei einer geringen Anzahl an Trainingsdaten.

Die Ausgangsgrößen dieses verbesserten Messsystems können vielfältig eingesetzt werden. Für einen bevorzugten Einsatz werden die Maschinenlernalgorithmen oder stochastischen Modelle auf einem Rechner im Fahrzeug während des Betriebs aktuell berechnet. Das kann auch Standardhardware geschehen, z.B. durch die Recheneinheit eines Fahrzeugsteuergeräts. Besonders eignet sich hierzu aber ein Steuergerät, welches neben einem herkömmlichen Rechenkern noch über eine dedizierte Hardwareeinheit verfügt, welche den Rechenkern bei der Berechnung der Maschinenlernalgorithmen oder stochastischen Modelle unterstützt. Als solche Hardwareeinheit eignet sich insbesondere eine Advanced Modelling Unit, wie sie z.B. in der DE 10 2016 216951 A1 beschrieben ist.

Die Eingangsgrößen können beim Einsatz im Fahrbetrieb aktuellen Sensordaten entsprechen oder aus diesen berechnet werden oder ebenfalls aus Modellen über die Fahrzeuggrößen stammen. Besonders eignen sich hierfür eine oder mehrere der Größen Abgastemperatur, Abgasdruck, Abgasmassenstrom, NOₓ-Konzentration vor dem SCR-Katalysator, NO/NO₂-Verhältnis und Raumgeschwindigkeit des Abgases neben der den initialen NH₃-Füllstand des SCR-Katalysators beschreibenden Größe. Durch die Auswahl dieser Eingangsgrößen ist eine präzise Modellierung der Funktionsweise des SCR-Katalysators möglich und somit eine präzise Berechnung der gewünschten Ausgangsgrößen.

Mit den ermittelten Ausgangswerten kann im Fahrbetrieb die Abgasnachbehandlung verbessert werden, z.B. durch regelnde Eingriffe in die Abgasnachbehandlung selbst (z.B. über eine angepasste Dosierung oder ein Eingriff in die Regelung NOₓ/ Ruß) oder durch Regeleingriffe in weitere Fahrgrößen, z.B. eine Geschwindigkeitsdrosselung oder für einen Hybridmotor ein Umschalten von einem Verbrennerbetrieb zum Betrieb mit der E-Maschine. Auch für Diagnosezwecke des Abgasnachbehandlungssystems oder Warnmeldungen bezüglich zu starker Emissionen können die Ausgangsgrößen herangezogen werden. Insbesondere sind durch die Modellierung auch voraussagende Berechnungen und somit prädiktive Regeleingriffe im Fahrbetrieb möglich.

In Systemen, in welchen die Ausgangsgrößen der Maschinenlernalgorithmen oder stochastischen Modelle redundant auch von Sensoren bestimmt werden, können diese auch zur Überwachung oder Plausibilisierung der entsprechenden Sensoren verwendet werden bzw. in bestimmten, für die Sensoren als schwierig bekannten Betriebsbereichen die Sensorergebnisse korrigieren oder ersetzen.

Vorzugsweise läuft das Verfahren wiederholt für aufeinanderfolgende Zeitschritte ab. Somit ist im Fahrbetrieb eine Berechnung der aktuellen Ausgangsgrößen in Echtzeit möglich. Die berechneten Ausgangsgrößen können auch wiederum als Eingangsgrößen für die Berechnungen im nächsten Zeitschritt herangezogen werden. Besonders bevorzugt wird dabei eine Variante, in welcher zusätzlich zu den beschriebenen Berechnungen noch eine Massen- bzw. Stoffmengen-Bilanzierung von zugeführtem NH₃, umgesetzten NH₃ (gewünschte Reduktion von Stickoxiden zu Stickstoff) und verlorenem NH₃ (NH₃-Schlupf und NH₃-Oxidation) erfolgt, wobei der NH₃-Umsatz auf einer stöchiometrischen Berechnung basiert. Hierzu wird durch den mindestens einen Maschinenlernalgorithmus oder das mindestens eine stochastische Modell neben den beschriebenen Ausgangsgrößen NOₓ-Konzentration und NH₃-Schlupf noch die NH₃-Oxidation im Katalysator aufgrund der beschriebenen Eingangsgrößen berechnet und als Eingangsgröße für die stöchiometrische Berechnung herangezogen. Der aus dieser Betrachtung und der Kenntnis des initialen Füllstandes ermittelte aktuelle NH₃-Füllungsgrad dient wiederum als Eingangswert für die Berechnungen von NOₓ-Konzentration, NH₃-Schlupf und NH₃-Oxidation im nächsten Zeitschritt. Die stöchiometrische Berechnung berücksichtigt somit die im SCR-Katalysator ablaufenden chemischen Reaktionen. Durch diese Kombination datenbasierter dynamischer Modellierung mit der Massen- bzw. Stoffmengen-Bilanzierung wird der aktuelle NH₃-Füllungsgrad am besten berücksichtigt. Sie führt damit zu den besten Ergebnissen bei der Berechnung der gewünschten Ausgangsgrößen.

Die beschriebene Modellierung kann in einer alternativen Ausgestaltung auch zusammen mit Motormodellen (Maschinenlernalgorithmen, stochastischen Modellen, physikalischen Modellen) in der Motorentwicklung eingesetzt werden. Die Eingangsgrößen werden hierbei aus den Motormodellen entnommen, welche das Motorverhalten z.B. für bestimmte Fahrsituationen oder Fahrzyklen simulieren. Besonders vorteilhaft ist hierbei, dass beliebige Fahrzyklen und deren Auswirkungen auf die Funktionsweise des SCR-Katalysators bereits in der Simulation und Modellierung des Motors berücksichtigt werden können. Die Ausgangsgrößen der Modellierung des SCR-Katalysators über die Maschinenlernalgorithmen oder stochastischen Modelle bzw. die stöchiometrische Berechnung können hier wiederum als Eingangsgrößen für die Motormodelle für den nächsten Zeitschritt verwendet werden. Insgesamt können so für simulierte Motoren die Auswirkungen des SCR-Katalysators auf die Motoremissionen präzise berücksichtigt werden und somit bereits in der Motorenentwicklung Anpassungen des Motorlayouts bzw. des Abgasnachbehandlungssystems mit dem Ziel von Emissionsreduzierungen erfolgen.

### Zeichnungen

Nachfolgend ist die Erfindung unter Bezugnahme auf den beiliegenden Zeichnungen und anhand von Ausführungsbeispielen näher beschrieben.
Figur 1 zeigt einen schematischen Ausschnitt aus dem Abgasstrang eines beispielhaften Dieselmotors.
Figur 2 zeigt schematisch einen beispielhaften Ablauf eines Verfahrens zur Ermittlung einer NOₓ-Konzentration und eines NH₃-Schlupfes stromabwärts eines SCR-Katalysators.

### Beschreibung der Ausführungsbeispiele

Für die Regelung von Motoren und deren Abgasnachbehandlungssystems im Betrieb sowie für die Entwicklung von Verbrennungsmotoren mit verbesserter Abgasnachbehandlung ist es wichtig, präzise und hochaktuelle Informationen über die Wirksamkeit der eingesetzten Abgasnachbehandlungskomponenten zur Verfügung zu haben. Dies gestaltet sich beim SCR-Katalysator oftmals als herausfordernd, v.a. aufgrund der Verfügbarkeit und des Ansprechverhaltens von Sensoren für Betriebsgrößen wie Stickoxid-Konzentration oder NH₃-Schlupf. Funktioniert ein SCR-Katalysator in bestimmten Betriebssituation schlechter als gedacht, kann das deutliche Auswirkungen auf das Emissionsverhalten des Motors haben, aber unter Umständen nicht oder nur stark verzögert festgestellt werden.

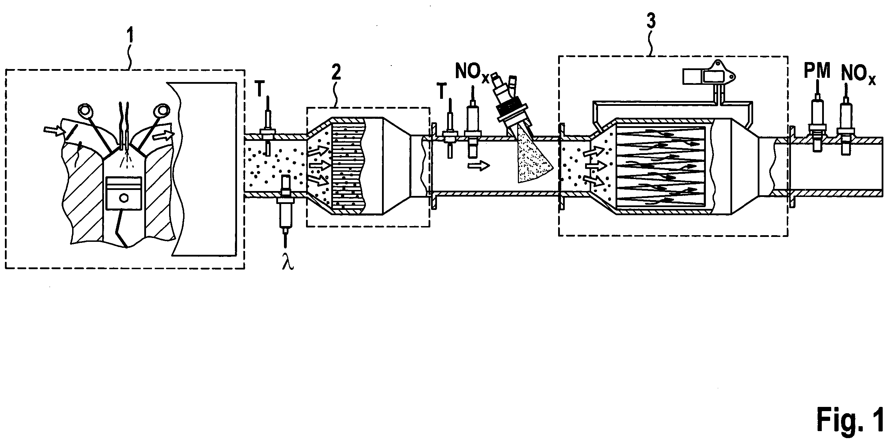

Figur 1 zeigt schematisch einen Ausschnitt aus dem Abgasstrang eines beispielhaften Dieselmotors. Dabei ist schematisch ein Motorausschnitt 1 mit Brennkammer als Beginn des Abgasstrangs gezeigt. Das Abgas strömt nach der Verbrennung durch einen Dieseloxidationskatalysator 2. Zwischen dem Motorausschnitt 1 und dem Dieseloxidationskatalysator 2 sind ein Temperatursensor und eine Lambdasonde angeordnet. Im Abgasstrang folgt stromabwärts des Dieseloxidationskatalysators 2 ein SCR-Katalysator 3. Zwischen Dieseloxidationskatalysator 2 und SCR-Katalysator 3 sind ein Temperatursensor und ein NOₓ-Sensor angeordnet. Stromabwärts des SCR-Katalysators sind ein Partikelsensor (PM) und ein NOₓ-Sensor angeordnet.

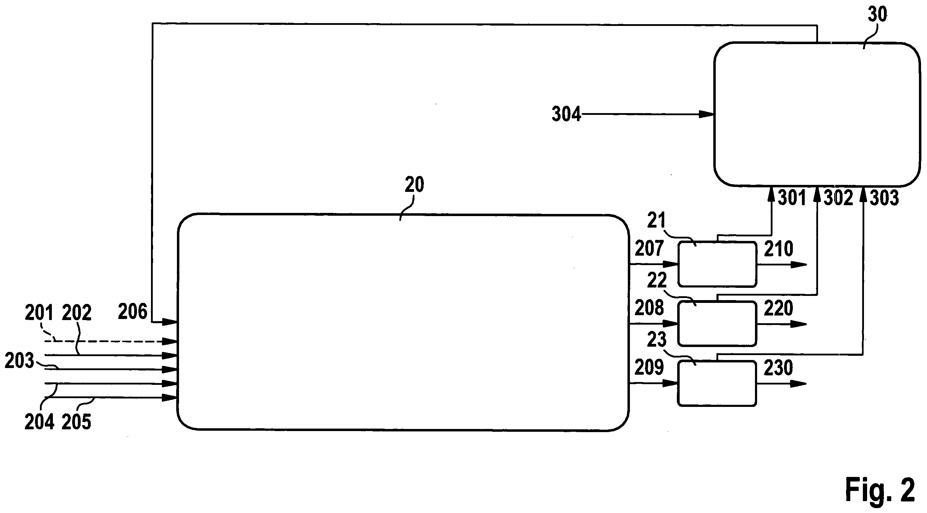

Figur 2 zeigt schematisch einen beispielhaften Ablauf der beschriebenen Verfahren. Dabei repräsentiert Block 20 die Modellierung des SCR-Katalysators zur Berechnung der Ausgangsgrößen NOₓ-Konzentration nach dem SCR-Katalysator sowie NH₃-Schlupf des SCR-Katalysators mittels mindestens eines Maschinenlernalgorithmus oder mindestens eines stochastischen Modells. Als Eingangsgrößen sind beispielhaft die Abgastemperatur 202, NOₓ-Konzentration vor dem SCR-Katalysator 203, NO/NO₂-Verhältnis 204 sowie Raumgeschwindigkeit des Abgases 205 gezeigt. Zudem wird in einem initialen Schritt vor einer ersten Berechnung der dynamischen Modellierung ein Eingangswert 201 gewählt oder geschätzt, welcher den Füllungsgrad des SCR-Katalysators mit NH₃ repräsentiert. Da dieser Wert in der Regel nicht sensorisch zur Verfügung steht, muss er aus aktuellen oder vergangenen Betriebsgrößen bzw. -zuständen ermittelt oder geschätzt werden. In bestimmten Betriebszuständen, z.B. zu Beginn eines Betriebs, kann auch eine Schätzung des Füllungsgrades, z.B. auf null, zweckhaft und ausreichend genau sein. Der NH₃-Füllungsgrad kann auch durch Speicherung nach Fahrtende in einem nichtflüchtigen Speicher zu Beginn der neuen Fahrt zur Verfügung stehen und damit das Model bei einem neuen Fahrzyklus korrekt initialisiert werden. Der mindestens eine Maschinenlernalgorithmus oder das mindestens eine stochastische Modell 20 liefern einen aktuellen Ausgangswert 207 für die NOₓ-Konzentration nach dem bzw. stromabwärts vom SCR-Katalysator, welcher als Wert 21 abgespeichert werden kann, sowie einen aktuellen Ausgangswert 208 für den NH₃-Schlupf des SCR-Katalysators, welcher als Wert 22 abgespeichert werden kann, sowie einen aktuellen Ausgangswert 209 für die NH₃-Oxidation im Katalysator, welcher als Wert 23 abgespeichert werden kann. Dabei werden die Werte vorzugsweise für einen aktuellen Zeitschritt berechnet. Die abgespeicherten Werte 21, 22 bzw. 23 können als Werte 210, 220 bzw. 230 für weitere Berechnungen im Fahrzeug, beispielsweise für Regelungen des Abgasnachbehandlungssystems oder weiterer Fahrzeuggrößen oder für Diagnosen verwendet werden. Sie gehen zudem vorzugsweise als Eingangsgrößen 301, 302 bzw. 303 in die als Block 30 gezeigte, auf Stöchiometrie und Massen- bzw. Stoffmengenbilanz basierende Berechnung des aktualisierten NH₃-Füllungsgrades ein. Zudem wird für die Berechnung des aktuellen NH₃-Füllungsgrades noch die aktuelle (im aktuellen Zeitschritt erfolgte) NH₃-Dosierung 304 für den SCR-Katalysator herangezogen. Im Berechnungsblock 30 wird dabei eine stöchiometrische Berechnung durchgeführt, welche die im SCR-Katalysator ablaufenden chemischen Reaktionen berücksichtigt, insbesondere die gewünschte Reduktion von Stickoxiden zu Stickstoff, unerwünschte NH₃-Oxidationen sowie den NH₃-Schlupf. Dazu werden Bilanzgleichungen eingesetzt.

Der berechnete, aktualisierte NH₃-Füllungsgrad geht wiederum neben den weiteren Eingangsgrößen 202-205 und anstelle des Initialwertes 201 in den Berechnungsblock 20 für den nächsten Zeitschritt ein. Das Verfahren wird iterativ für weitere Zeitschritte durchgeführt.

Für den Berechnungsblock 20 können künstliche Neuronale Netzwerke wie faltende Neuronale Netzwerke (Convolutional Neuronal Networks), insbesondere mit nicht-linearen, exogenen Eingaben, eingesetzt werden. Alternativ eignen sich auch Gaußprozesse wie spärlicher Gaußprozessmodelle (Sparse Gaussian Process), z.B. mit konstanter Abweichung.

## Patentansprüche

1. Verfahren zur Ermittlung einer NOₓ-Konzentration und eines NH₃-Schlupfes stromabwärts eines SCR-Katalysators (3) eines Verbrennungsmotors eines Fahrzeugs, **dadurch gekennzeichnet, dass** Zustandsgrößen eines Verbrennungsmotors als erste Eingangsgrößen (202, 203, 204, 205) und ein aktueller NH₃-Füllungsgrad (201, 206) des SCR-Katalysators (3) als zweite Eingangsgröße in mindestens einen Maschinenlernalgorithmus (20) oder mindestens ein stochastisches Modells (20) eingehen und der mindestens eine Maschinenlernalgorithmus (20) oder das mindestens eine stochastische Modell (20) abhängig von den ersten Eingangsgrößen (202, 203, 204, 205) und der zweiten Eingangsgröße (201, 206) die NOₓ-Konzentration (21) sowie den NH₃-Schlupf (22) stromabwärts des SCR-Katalysators (3) berechnet und als Ausgangsgrößen (207, 208) ausgibt.

2. Verfahren nach Anspruch 1, **dadurch gekennzeichnet, dass** das Verfahren wiederholt für aufeinanderfolgende Zeitschritte abläuft.

3. Verfahren nach Anspruch 2, **dadurch gekennzeichnet, dass** der mindestens eine Maschinenlernalgorithmus (20) oder das mindestens eine stochastische Modell (20) abhängig von den ersten Eingangsgrößen (202, 203, 204, 205) und der zweiten Eingangsgröße (201, 206) eine NH₃-Oxidation (23) im SCR-Katalysator (3) berechnet und als Ausgangsgröße (209) ausgibt.

4. Verfahren nach Anspruch 3, bei welchem die ausgegebene NOₓ-Konzentration (21), der ausgegebene NH₃-Schlupf (22) und die ausgegebene NH₃-Oxidation (23) neben einer aktuellen NH₃-Dosierung (303) für den SCR-Katalysator als Eingangsgrößen (301, 302) in eine stöchiometrische Berechnung (30) eines aktualisierten NH₃-Füllungsgrades eingehen und der berechnete, aktualisierte NH₃-Füllungsgrad ausgegeben und als der aktuelle NH₃-Füllungsgrad und als die zweite Eingangsgröße (206) für die Berechnung und Ausgabe der NOₓ-Konzentration (21), des NH₃-Schlupfes (22) und der NH₃-Oxidation (23) stromabwärts des SCR-Katalysators (3) in einem nächsten Zeitschritt durch den mindestens einen Maschinenlernalgorithmus oder das mindestens eine stochastische Modell (20) verwendet wird.

5. Verfahren nach einem der Ansprüche 2 bis 4, **dadurch gekennzeichnet, dass** in einem ersten Zeitschritt ein initialer Wert (201) für den aktuellen NH₃-Füllungsgrad abhängig vom Betriebszustand des Verbrennungsmotors gewählt oder geschätzt wird, insbesondere, dass ein initialer NH₃-Füllungsgrad von Null gewählt oder geschätzt wird, oder dass ein gespeicherter initialer Wert (201) aus einer vorausgegangenen Berechnung gewählt wird.

6. Verfahren nach einem der Ansprüche 4 oder 5, **dadurch gekennzeichnet, dass** in der stöchiometrischen Berechnung (30) die im SCR-Katalysator (3) ablaufenden chemischen Reaktionen berücksichtigt werden, insbesondere eine Reduktion von Stickoxiden zu Stickstoff, eine NH₃-Oxidation sowie der NH₃-Schlupf.

7. Verfahren nach Anspruch 6, **dadurch gekennzeichnet, dass** für die stöchiometrische Berechnung (30) Bilanzgleichungen eingesetzt werden.

8. Verfahren nach einem der vorangegangenen Ansprüche, **dadurch gekennzeichnet, dass** die ersten Eingangsgrößen (202, 203, 204, 205) mindestens eine der Größen Abgastemperatur (202), Abgasdruck, Abgasmassenstrom, NOₓ-Konzentration vor dem SCR-Katalysator (203), NO/NO₂-Verhältnis (204) sowie Raumgeschwindigkeit des Abgases (205) umfassen.

9. Verfahren nach einem der vorangegangenen Ansprüche, **dadurch gekennzeichnet, dass** die Berechnungen im Fahrzeug während eines Fahrbetriebs erfolgen, insbesondere in Echtzeit.

10. Verfahren nach Anspruch 9, **dadurch gekennzeichnet, dass** die Berechnungen durch eine Recheneinheit eines Steuergerätes des Fahrzeugs erfolgen.

11. Verfahren nach Anspruch 10, **dadurch gekennzeichnet, dass** die Recheneinheit bei den Berechnungen des mindestens einen Maschinenlernalgorithmus oder des mindestens einen stochastischen Modells (20) durch eine darauf optimierte Hardwareeinheit unterstützt wird.

12. Verfahren nach einem der Ansprüche 9 bis 11, **dadurch gekennzeichnet, dass** abhängig von den berechneten Ausgangsgrößen (21, 22) des mindestens einen Maschinenlernalgorithmus oder des mindestens einen stochastischen Modells (20) eine, insbesondere prädiktive, Regelung eines Abgasnachbehandlungssystems des Verbrennungsmotors oder eine, insbesondere prädiktive, Regelung eines Antriebssystems des Fahrzeugs erfolgt.

13. Verfahren nach einem der Ansprüche 9 bis 12, **dadurch gekennzeichnet, dass** abhängig von den berechneten Ausgangsgrößen (21, 22) des mindestens einen Maschinenlernalgorithmus oder des mindestens einen stochastischen Modells (20) eine Überwachung oder eine Korrektur von entsprechenden Sensorausgangsgrößen erfolgt.

14. Verfahren nach einem der Ansprüche 9 bis 13, **dadurch gekennzeichnet, dass** abhängig von den berechneten Ausgangsgrößen (21, 22) des mindestens einen Maschinenlernalgorithmus oder des mindestens einen stochastischen Modells (20) eine Überschreitung von Emissionsgrößen festgestellt wird und eine entsprechende Warnmeldung ausgegeben oder eine entsprechende Fehlerreaktion eingeleitet wird.

15. Verfahren nach einem der vorangegangenen Ansprüche, **dadurch gekennzeichnet, dass** der mindestens eine Maschinenlernalgorithmus (20) als Künstliches Neuronales Netz, insbesondere als Convolutional Neural Network, als rekurrentes neuronales Netz, oder als Long short-term memory ausgestaltet ist.

16. Verfahren nach einem der vorangegangenen Ansprüche, **dadurch gekennzeichnet, dass** das mindestens eine stochastische Modell (20) mindestens ein Gaußprozess-Modell, insbesondere einen spärlichen Gaußprozess, oder einen Student-t-Prozess umfasst.

17. Computerprogramm, welches dazu eingerichtet ist, ein Verfahren nach einem der Ansprüche 1 bis 16 durchzuführen.

18. Speichermedium, auf welchem ein Computerprogramm nach Anspruch 17 abgelegt ist.

19. Fahrzeugsteuergerät, welches dazu eingerichtet ist, ein Verfahren nach einem der Ansprüche 1 bis 16 durchzuführen.

## Claims

1. Method of ascertaining an NOₓ concentration and an NH₃ slip downstream of an SCR catalyst (3) of an internal combustion engine of a motor vehicle, **characterized in that** state parameters of an internal combustion engine as first input parameters (202, 203, 204, 205) and a current NH₃ fill level (201, 206) of the SCR catalyst (3) as second input parameter go into at least one machine learning algorithm (20) or at least one stochastic model (20), and the at least one machine learning algorithm (20) or the at least one stochastic model (20), depending on the first input parameters (202, 203, 204, 205) and the second input parameter (201, 206), calculates the NOₓ concentration (21) and the NH₃ slip (22) downstream of the SCR catalyst (3) and outputs them as output parameters (207, 208).

2. Method according to Claim 1, **characterized in that** the method runs repeatedly for successive time intervals.

3. Method according to Claim 2, **characterized in that** the at least one machine learning algorithm (20) or the at least one stochastic model (20), depending on the first input parameters (202, 203, 204, 205) and the second input parameter (201, 206), calculates oxidation of NH₃ (23) in the SCR catalyst (3) and outputs it as output parameter (209).

4. Method according to Claim 3, in which the output NOₓ concentration (21), the output NH₃ slip (22) and the output NH₃ oxidation (23), as well as a current NH₃ dosage (303) for the SCR catalyst, go as input parameters (301, 302) into a stoichiometric calculation (30) of an updated NH₃ fill level and the calculated updated NH₃ fill level is output and is used as the current NH₃ fill level and as the second input parameter (206) for the calculation and output of the NOₓ concentration (21), the NH₃ slip (22) and the NH₃ oxidation (23) downstream of the SCR catalyst (3) in a next time interval by means of the at least one machine learning algorithm or the at least one stochastic model (20).

5. Method according to any of Claims 2 to 4, **characterized in that**, in a first time interval, an initial value (201) is chosen or estimated for the current NH₃ fill level depending on the state of operation of the internal combustion engine, especially **in that** an initial NH₃ fill level of zero is chosen or estimated, or **in that** a stored initial value (201) from a preceding calculation is chosen.

6. Method according to either of Claims 4 and 5, **characterized in that** stoichiometric calculation (30) takes account of the chemical reactions that proceed in the SCR catalyst (3), especially a reduction of nitrogen oxides to nitrogen, oxidation of NH₃, and NH₃ slip.

7. Method according to Claim 6, **characterized in that** balance equations are used for the stoichiometric calculation (30).

8. Method according to any of the preceding claims, **characterized in that** the first input parameters (202, 203, 204, 205) comprise at least one of the parameters of exhaust gas temperature (202), exhaust gas pressure, exhaust gas mass flow rate, NOₓ concentration upstream of the SCR catalyst (203), NO/NO₂ ratio (204) and space velocity of the exhaust gas (205).

9. Method according to any of the preceding claims, **characterized in that** the calculations in the vehicle are effected during driving operation, especially in real time.

10. Method according to Claim 9, **characterized in that** the calculations are effected by a computer unit of a control device of the motor vehicle.

11. Method according to Claim 10, **characterized in that** the computer unit is assisted by a hardware unit optimized thereto in the calculations of the at least one machine learning algorithm or the at least one stochastic model (20).

12. Method according to any of Claims 9 to 11, **characterized in that**, depending on the calculated output parameters (21, 22) from the at least one machine learning model or the at least one stochastic model (20), closed-loop control, especially predictive closed-loop control, of an exhaust gas aftertreatment system of the internal combustion engine or closed-loop control, especially predictive closed-loop control, of a drive system of the motor vehicle is effected.

13. Method according to any of Claims 9 to 12, **characterized in that**, depending on the calculated output parameters (21, 22) from the at least one machine learning algorithm or the at least one stochastic model (20), corresponding sensor output parameters are monitored or corrected.

14. Method according to any of Claims 9 to 13, **characterized in that**, depending on the calculated output parameters (21, 22) from the at least one machine learning model or the at least one stochastic model (20), exceedance of emission parameters is detected and a corresponding warning message is output or a corresponding reaction to the error is initiated.

15. Method according to any of the preceding claims, **characterized in that** the at least one machine learning algorithm (20) is configured as an artificial neural network, especially as a convolutional neural network, as a recurrent neural network, or as long short-term memory.

16. Method according to any of the preceding claims, **characterized in that** the at least one stochastic model (20) comprises at least one Gaussian process model, especially a sparse Gaussian process, or a Student-t process.

17. Computer program set up to perform a method according to any of Claims 1 to 16.

18. Storage medium on which a computer program according to Claim 17 has been stored.

19. Motor vehicle control device set up to perform a method according to any of Claims 1 to 16.

## Revendications

1. Procédé pour déterminer une concentration de NOx et une fuite ionique de NH₃ en aval d'un catalyseur à RCS (3) d'un moteur à combustion interne d'un véhicule, **caractérisé en ce que** des grandeurs d'état d'un moteur à combustion interne interviennent en tant que premières grandeurs d'entrée (202, 203, 204, 205) et un niveau de remplissage de NH₃ (201, 206) actuel du catalyseur à RCS (3) intervient en tant que deuxième grandeur d'entrée dans au moins un algorithme d'apprentissage automatique (20) ou au moins un modèle stochastique (20) et l'au moins un algorithme d'apprentissage automatique (20) ou l'au moins un modèle stochastique (20) calcule la concentration de NOx (21) ainsi que la fuite ionique de NH₃ (22) en aval du catalyseur à RCS (3) en fonction des premières grandeurs d'entrée (202, 203, 204, 205) et de la deuxième grandeur d'entrée (201, 206) et les délivre en tant que grandeurs de sortie (207, 208).

2. Procédé selon la revendication 1, **caractérisé en ce que** le procédé se déroule de manière répétée pour des paliers temporels successifs.

3. Procédé selon la revendication 2, **caractérisé en ce que** l'au moins un algorithme d'apprentissage automatique (20) ou l'au moins un modèle stochastique (20) calcule une oxydation de NH₃ (23) dans le catalyseur à RCS (3) en fonction des premières grandeurs d'entrée (202, 203, 204, 205) et de la deuxième grandeur d'entrée (201, 206) et la délivre en tant que grandeur de sortie (209).

4. Procédé selon la revendication 3, avec lequel la concentration de NOₓ (21) délivrée en sortie, la fuite ionique de NH₃ (22) délivrée en sortie et l'oxydation de NH₃ (23) délivrée en sortie, outre un dosage de NH₃ (303) actuel pour le catalyseur à RCS, interviennent en tant que grandeurs d'entrée (301, 302) dans un calcul stœchiométrique (30) d'un niveau de remplissage de NH₃ actualisé et le niveau de remplissage de NH₃ actualisé calculé est délivré en sortie et est utilisé en tant que niveau de remplissage de NH₃ actuel et en tant que deuxième grandeur d'entrée (206) pour le calcul et la délivrance en sortie de la concentration de NOₓ (21), de la fuite ionique de NH₃ (22) et de l'oxydation de NH₃ (23) en aval du catalyseur à RCS (3) dans un palier temporel suivant par l'au moins un algorithme d'apprentissage automatique ou l'au moins un modèle stochastique (20).

5. Procédé selon l'une des revendications 2 à 4, **caractérisé en ce que** dans un premier palier temporel, une valeur initiale (201) pour le niveau de remplissage de NH₃ actuel est sélectionnée ou évaluée en fonction de l'état opérationnel du moteur à combustion interne, notamment **en ce qu'**un niveau de remplissage de NH₃ initial égal à zéro est sélectionné ou évalué, ou **en ce qu'**une valeur initiale (201) mémorisée issue d'un calcul précédent est sélectionnée.

6. Procédé selon l'une des revendications 4 et 5, **caractérisé en ce que** les réactions chimiques qui se déroulent dans le catalyseur à RCS (3), notamment une réduction des oxydes d'azote en azote, une oxydation de NH₃ ainsi que la fuite ionique de NH₃, sont prises en compte dans le calcul stœchiométrique (30).

7. Procédé selon la revendication 6, **caractérisé en ce que** des équations d'équilibre sont utilisées pour le calcul stœchiométrique (30).

8. Procédé selon l'une des revendications précédentes, **caractérisé en ce que** les premières grandeurs d'entrée (202, 203, 204, 205) comprennent au moins l'une des grandeurs suivantes : température des gaz d'échappement (202), pression des gaz d'échappement, débit massique des gaz d'échappement, concentration de NOx avant le catalyseur à RCS (203), rapport NO/NO₂ (204) ainsi que vitesse dans l'espace des gaz d'échappement (205).

9. Procédé selon l'une des revendications précédentes, **caractérisé en ce que** les calculs sont effectués dans le véhicule pendant un régime de déplacement, notamment en temps réel.

10. Procédé selon la revendication 9, **caractérisé en ce que** les calculs sont effectués par une unité de calcul d'un contrôleur du véhicule.

11. Procédé selon la revendication 10, **caractérisé en ce que** l'unité de calcul est assistée par une unité matérielle optimisée à cet effet lors des calculs de l'au moins un algorithme d'apprentissage automatique ou de l'au moins un modèle stochastique (20).

12. Procédé selon l'une des revendications 9 à 11, **caractérisé en ce qu'**une régulation, notamment prédictive, d'un système de post-traitement des gaz d'échappement du moteur à combustion interne ou une régulation, notamment prédictive, d'un système de propulsion du véhicule est effectuée en fonction des grandeurs de sortie (21, 22) calculées de l'au moins un algorithme d'apprentissage automatique ou de l'au moins un modèle stochastique (20).

13. Procédé selon l'une des revendications 9 à 12, **caractérisé en ce qu'**une surveillance ou une correction des grandeurs de sortie de capteur correspondantes est effectuée en fonction des grandeurs de sortie (21, 22) calculées de l'au moins un algorithme d'apprentissage automatique ou de l'au moins un modèle stochastique (20).

14. Procédé selon l'une des revendications 9 à 13, **caractérisé en ce qu'**un dépassement de grandeurs d'émission est constaté et un message d'alerte correspondant est délivré ou une réaction de défaut correspondante est initiée en fonction des grandeurs de sortie (21, 22) calculées de l'au moins un algorithme d'apprentissage automatique ou de l'au moins un modèle stochastique (20).

15. Procédé selon l'une des revendications précédentes, **caractérisé en ce que** l'au moins un algorithme d'apprentissage automatique (20) est configuré en tant que réseau neuronal artificiel, notamment en tant que réseau neuronal convolutif, en tant que réseau neuronal récurrent ou en tant que mémoire à court terme longue.

16. Procédé selon l'une des revendications précédentes, **caractérisé en ce que** l'au moins un modèle stochastique (20) comprend au moins un modèle de processus de Gauss, notamment un processus de Gauss clairsemé ou un processus t de Student.

17. Programme informatique, qui est conçu pour mettre en œuvre un procédé selon l'une des revendications 1 à 16.

18. Support d'enregistrement sur lequel est stocké un programme informatique selon la revendication 17.

19. Contrôleur de véhicule, qui est conçu pour mettre en œuvre un procédé selon l'une des revendications 1 à 16.
